# EUROPEAN PATENT SPECIFICATION

(11) **EP 0 356 083 B1**
(45) Date of publication and mention of the grant of the patent: **26.10.1994**
(21) Application number: 89308161.2
(22) Date of filing: 10.08.1989
(51) Int. Cl.: A01B 29/06, A01B 29/04

(54) **Coil apparatus having cleaning means, and earth working apparatus incorporating said coil apparatus**
Spiralgerät mit Abstreifer und Bodenbearbeitungsmaschine, das dieses Spiralgerät inkorporiert
Dispositif à spirale, et machine pour cultiver le sol incorporant ce dispositif à spirale

(30) Priority: 24.08.1988 GB 8820106
(43) Date of publication of application: 28.02.1990
(73) Proprietor: FLEXI-COIL (UK) LIMITED, York YO4 4NF (GB)
(72) Inventor: Bradley, John, Pocklington North Humberside (GB)
(74) Representative: Needle, Jacqueline

(56) References cited:
- EP-A- 0 280 399
- US-E- 18 039

## Description

The present invention relates to apparatus comprising a coil and means for cleaning the soil. The invention also relates to earth working apparatus and to means for cleaning such apparatus.

A number of forms of apparatus used for earth working include a flexible helical coil mounted on a frame for rotation about the longitudinal axis of the coil relative to the frame. In operation the coil rotates about a substantially horizontal axis by the effect of contact of the earth with the coil when the coil is dragged across the ground, for example by a tractor. The rotation of the coil may be used for example for crumbling the earth to provide a seed bed, or the apparatus may be used as a plough packer for consolidating the land after ploughing, again to provide a seed bed.

A difficulty with such coils is that, particularly in wet conditions, earth clings to the coils, blocking the coils and reducing efficiency of operation.

US-A-2261893 illustrates a cylindrical roller provided with external helical ribs for compacting and rolling earth. To clean the helical ribs a rotatable scraper shaft is mounted to extend parallel to the axis of the roller and carries a number of prongs to mesh with the ribs.

US-RE-18039 shows a cylindrical roller carrying one or more plow elements helically disposed on its exterior surface for plowing. To clean the plow elements a reciprocable bar is mounted to extend parallel to the axis of the roller, and carries a number of cleaner elements to engage the plow elements. The camming action of the plow elements on the cleaner elements reciprocates the bar.

However, practical attempts to utilise such systems to scrape excess earth off earth working coils have been unsuccessful in adequately cleaning the turns of the coil.

It is an object of the present invention to provide apparatus comprising efficient means for cleaning a coil.

According to a first aspect of the present invention there is provided apparatus comprising a coil mounted for rotation about the longitudinal axis of the coil, and means for cleaning the coil, said cleaning means comprising a plurality of cleaning elements for engaging with or protruding into said coil, wherein each said cleaning element is coupled to a shaft extending substantially parallel to the longitudinal axis of the coil, said shaft being arranged to be reciprocated in a direction having at least a component substantially parallel to said longitudinal axis, the apparatus being characterised in that each cleaning element is pivotable about an axis extending substantially transversely to said longitudinal axis of the coil, and in the said shaft couples said cleaning elements together such that they pivot substantially together.

The present invention also extends to an earth working apparatus comprising a frame, a coil supported by the frame for rotation about the longitudinal axis of the coil in contact with the earth for the purposes of earth working, and means for cleaning the coil, said cleaning means comprising a plurality of cleaning elements for engaging with or protruding into said coil, wherein each said cleaning element is coupled to a shaft extending substantially parallel to the longitudinal axis of the coil, said shaft being arranged to be reciprocated in a direction having at least a component substantially parallel to said longitudinal axis, the apparatus being characterised in that each cleaning element is pivotable about an axis extending substantially transversely to said longitudinal axis of the coil, and in that said shaft couples said cleaning elements together such that they pivot substantially together.

It will be appreciated that during rotation of the coil, the spaces between turns of the coil in effect progress along said longitudinal axis of the coil. It is therefore not possible to clean the coil by fixed protrusions which intrude into the spaces between the turns of the coils, since such fixed protrusions would jam against the rotating turns of the coil. The pivoting of the cleaning elements, for example, by the reciprocation of the shaft enables the cleaning elements which protrude into the coil to be moved out of any potential jamming position.

In an embodiment, at least one camming element is arranged to engage said coil such that a camming action is produced between said camming element and said coil which is arranged to move said shaft in said direction having at least a component substantially parallel to said longitudinal axis. Preferably, said shaft is resiliently mounted by way of springs and said camming action is arranged to move said shaft against spring action.

In one embodiment at least two spaced camming elements are coupled to said shaft, and a plurality of cleaning elements are also coupled to said shaft. For example, said cleaning elements may comprise spikes, bars, blades or other projections arranged to protrude between turns of the coil. The camming action is arranged periodically to pivot the projections clear of the coil to allow the effective longitudinal progression of the spaces of the coil upon rotation, and therefore to prevent jamming.

Preferably, said camming elements are also arranged to effect cleaning of the coil. For example, each said camming element comprises a body arranged for rotation about an axis extending substantially perpendicular both to said longitudinal axis and to the pivot axes of said cleaning elements. Said body has a peripheral surface arranged to engage turns of said coil whereby cleaning is effected. Each said body is also pivotable about an axis extending substantially transverse to said longitudinal axis of the coil, and is coupled to said reciprocable shaft. It will be appreciated that as a turn of the coil progresses effectively along the longitudinal axis upon rotation of the coil it is arranged to pivot said camming element about its pivot axis whereby movement of said shaft in a direction substantially parallel to said longitudinal axis is effected.

In an embodiment, a plurality of cleaning elements are coupled to said shaft, and each said cleaning element is also configured to constitute a camming element as defined above. Preferably, each turn of the coil has at least one said cleaning and camming element associated therewith.

The profile of the peripheral surfaces of said camming and cleaning and camming elements may be cylindrical or may have a generally conical shape.

In earth working apparatus where the coil is supported by a frame, said shaft is preferably also supported by said frame. For example, in an embodiment the ends of said shaft are each coupled to said frame by a respective tension spring. Of course, alternative resilient means may be provided as required.

In one preferred form, the said cleaning means comprises a plurality of camming and cleaning bodies arranged along the length of said shaft, each said body being substantially cylindrical in shape.

In a preferred form, said coil is substantially helical and the pitch of said helical coil is substantially the same as that of said cleaning and camming bodies such that said bodies protrude between the turns of said coil in a regular manner. Of course, in other arrangements a different pitch may be used, for example, said bodies may be arranged to have a pitch which is a multiple or a fraction of the pitch of the helical coil.

Preferably, said helical coil has a central axial core extending substantially parallel to said shaft.

It will be appreciated that it would be possible for said shaft to be reciprocated by drive means independent of said coil. However, it is generally preferred that the reciprocation of said shaft be by way of the camming action caused by the contact between the camming elements and the coil as described above.

In the case of an earth working coil, it is preferred that the earth working coil is driven in rotation by the effect of contact with the ground as the coil is moved over the earth. Thus, at least in preferred embodiments of the invention, there may be provided cleaning means for an earth working coil which is powered entirely by the movement of the earth working coil over the ground, and which allows thorough cleaning of the earth working coil by the protrusion of cleaning elements into the spaces between the turns of the coil. There is preferably no direct contact of the cleaning elements with the turns of the coil. This enables efficient cleaning of the turns of the earth working coil without scraping, such that there is therefore little or no wear on the coil as a result of the cleaning action. Preferably the bodies of the cleaning elements are made of wood, rubber, polypropylene or the like.

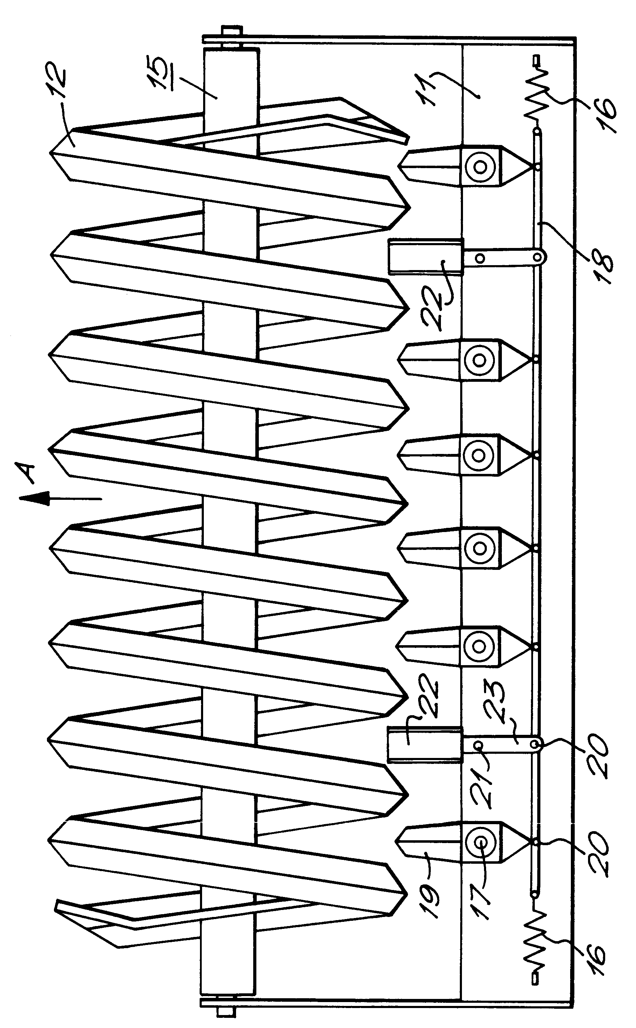

An embodiment of the present invention will hereinafter be described, by way of example, with reference to the accompanying drawing, in which the single figure shows a diagrammatic plan view of an earth working apparatus embodying the invention.

An earth working apparatus is illustrated and includes a frame 11 arranged to be attached to a vehicle, for example at the rear of a tractor, for movement over the land in a direction for example as indicated by the arrow A, although in some circumstances the apparatus may move in the opposite direction to the direction A.

A flexible helical coil 12 is mounted for example, by way of plates (not shown), on a central core 15 which is journalled for rotation about the longitudinal axis of the coil 12. The coil 12 may be of conventional design, for example a 1½ inch square steel bar wound along a helix having a pitch of 5½ inches. In operation the coil 12 is rotated by the effect of the coil being dragged over the ground by the tractor.

The frame 11 also supports a shaft 18 of a cleaning assembly for the coil 12. This shaft 18 is in the form of a tie-bar and extends substantially parallel to the core 15 and hence to the longitudinal axis of the coil 12. The tie-bar 18 is arranged to be movable in a direction substantially parallel to the longitudinal axis of the coil 12. Each end of the bar 18 is coupled to the frame 11 by way of a respective tension spring 16. Accordingly, movement of the shaft 18 in one direction substantially parallel to the longitudinal coil will cause the springs 16 to develop forces seeking to restore the bar 18 to its initial position, as illustrated.

The bar 18 couples together a plurality of cleaning elements 19 and camming bodies 22. Each of these elements 19 and of the bodies 22 is suitably pivotably connected to the bar 18, for example, by a pivotable connection 20. Each cleaning element 19 is pivotably mounted on the frame 11 by way of a respective pivot axis 17. Each such pivot axis 17 extends substantially transversely to the longitudinal axis of the coil 12 and of the bar 18. Similarly, each camming body 22 is pivotably mounted on the frame 11 by way of a respective pivot axis 21. The pivot axes 17 and 21 are aligned in the direction substantially parallel to the longitudinal axis of the coil 12 and of the bar 18.

In the embodiment illustrated, two spaced camming bodies 22 are each coupled to the bar 18 by way of an axle 23 which extends substantially perpendicular relative to said longitudinal axis and substantially transverse to said pivot axis 21. Each camming body 22 comprises a substantially cylindrical body which is rotatable about its axle 23. In the embodiment illustrated, each of the cleaning elements 19 is configured as a blade which protrudes between the turns of the coil 12.

In the illustrated embodiment each one of the cleaning elements 19 and of the camming bodies 22 protrudes within a respective space defined between two adjacent turns of the coil 12. The cylindrical body 22 of each camming body is arranged to contact the respective turn of the coil 12, whilst the cleaning elements 19 are each arranged close to a respective turn of the coil 12, but are not in contact therewith.

In operation the earth working coil 12 is rotated as it is pulled along the ground by the effect of its contact with the ground. It will be appreciated that this rotation of the coil 12 rotates the camming bodies 22 with which the coil is in contact. As the coil 12 rotates, the spaces between the turns of the coil effectively progress along the longitudinal axis of the coil. This imparts a force to the bodies 22 in a direction substantially parallel to the longitudinal axis of the coil, which force pivots these bodies about their pivot axes 21. This pivoting movement moves the bar 18 along its length which thereby effects a similar pivoting movement of the cleaning elements 19. In this way it is ensured that as the coil rotates, the camming bodies 22 and the cleaning elements 19 protruding between the turns of the coil do not jam the coil. A half rotation of the coil 12 effectively progresses each turn such that each camming body 22 is no longer held in its pivoted position. The springs 16 then act to restore the bar 18 and hence the cleaning elements 19 and the camming bodies 22 to their initial position during the next half cycle. Thereafter further rotation of the coil again causes pivoting of the camming bodies.

Although the cleaning elements 19 are not in contact with the coil 12 they are effective to clean the coil and in particular to prevent the formation of bridges of material across the spaces between the turns of the coil. Because there is no contact between the cleaning elements 19 and the coil there is little or no wear on the coil which can be attributed to the cleaning assembly.

However, it is preferred that the cleaning elements 19 are made of wood, rubber, polypropylene or similar material which would cause little wear if in contact with the coil. Of course, it would be possible to arrange for the cleaning elements 19 to contact the turns of the coil if required.

In the embodiment illustrated a single body, either a cleaning element 19 or a camming body 22 is associated with each turn of the coil 12. Alternatively, two or more adjacent bodies could be associated with each turn of the coil.

Of course, it will be appreciated that the cleaning elements 19 and the camming bodies 22 could be shaped differently to the shapes illustrated. For example, instead of providing a cylindrical camming body as illustrated, a generally conical body could be provided.

In the illustrated embodiment two bodies contact the coil to provide the camming action which in turn causes the necessary reciprocation of the bar 18 and hence pivots the cleaning elements. Of course, these camming bodies also have a cleaning action on the turns of the coil. However, it is not necessary to separate the camming and cleaning functions. Thus, a plurality of substantially identical bodies could be coupled by the bar 18 and each arranged to perform both a cleaning and a camming action.

It will be appreciated that variations in or modifications to the embodiments described and illustrated above may be made within the scope of the present invention as defined by the claims.

## Claims

1. Apparatus comprising a coil (12) mounted for rotation about the longitudinal axis of the coil, and means for cleaning the coil, said cleaning means comprising a plurality of cleaning elements (19) for engaging with or protruding into said coil, wherein each said cleaning element (19) is coupled to a shaft (18) extending substantially parallel to the longitudinal axis of the coil (12), said shaft (18) being arranged to be reciprocated in a direction having at least a component substantially parallel to said longitudinal axis, the apparatus being characterised in that each cleaning element (19) is pivotable about an axis (17) extending substantially transversely to said longitudinal axis of the coil (12), and in the said shaft (18) couples said cleaning elements (19) together such that they pivot substantially together.

2. An earth working apparatus comprising a frame, a coil (12) supported by the frame for rotation about the longitudinal axis of the coil in contact with the earth for the purposes of earth working, and means for cleaning the coil, said cleaning means comprising a plurality of cleaning elements (19) for engaging with or protruding into said coil, wherein each said cleaning element (19) is coupled to a shaft (18) extending substantially parallel to the longitudinal axis of the coil (12), said shaft (18) being arranged to be reciprocated in a direction having at least a component substantially parallel to said longitudinal axis, the apparatus being characterised in that each cleaning element (19) is pivotable about an axis (17) extending substantially transversely to said longitudinal axis of the coil (12), and in that said shaft (18) couples said cleaning elements (19) together such that they pivot substantially together.

3. Apparatus as claimed in Claim 1 or 2, wherein at least one camming element (22) is arranged to engage said coil such that a camming action is produced between said camming element and said coil (12) which is arranged to move said shaft (18) in said direction having at least a component substantially parallel to said longitudinal axis.

4. Apparatus as claimed in Claim 3, wherein said shaft(18) is resiliently mounted and said camming action is arranged to move said shaft (18) against the action of the resilient mounting.

5. Apparatus as claimed in any preceding claim, wherein at least two spaced camming elements (22) are coupled to said shaft (18), and a plurality of cleaning elements (19) are also coupled to said shaft (18), and wherein, for example, said cleaning elements (19) comprise spikes, bars, blades or other projections arranged to protrude between turns of the coil.

6. Apparatus as claimed in any one of Claims 3-5, wherein each said camming element (22) comprises a body arranged for rotation about an axis extending substantially perpendicular both to said longitudinal axis and to the pivot axes (17) of said cleaning elements (19), and wherein preferably said body has a peripheral surface arranged to engage turns of said coil whereby cleaning is effected.

7. Apparatus as claimed in claim 6, wherein each said body is also pivotable about an axis (21) extending substantially transverse to said longitudinal axis of the coil (12), and is coupled to said reciprocable shaft (18).

8. Apparatus as claimed in any of claims 1 to 4, wherein a plurality of cleaning elements (19, 22) are coupled to said shaft (18), and each said cleaning element is also configured to constitute a camming element arranged to engage said coil such that a camming action is produced between said camming element and said coil which is arranged to move said shaft in said direction having at least a component substantially parallel to said longitudinal axis and wherein preferably, each turn of the coil has at least one said cleaning and camming element associated therewith.

9. Earth working apparatus as claimed in claim 2, or as claimed in any of claims 3 to 8 when appended directly or indirectly on claim 2, wherein said shaft (18) is also supported by said frame (11).

10. Earth working apparatus as claimed in claim 9, wherein the ends of said shaft (18) are each coupled to said frame (11) by a respective tension spring (16).

11. Earth working apparatus as claimed in claim 9 or 10, wherein the said cleaning means comprises a plurality of camming and cleaning bodies (19, 22) arranged along the length of said shaft (18), each said body being substantially cylindrical in shape, and wherein said coil (12) is substantially helical and the pitch of said helical coil is substantially the same as that of said cleaning and camming bodies (19,22) such that said bodies protrude between the turns of said coil in a regular manner.

12. Earth working apparatus as claimed in claim 11, wherein said helical coil (12) has a central axial core extending substantially parallel to said shaft (18).

13. Earth working apparatus as claimed in any of claims 9 to 12, wherein the earth working coil (12) is arranged to be driven in rotation by the effect of contact with the ground as the coil is moved over the earth.

## Patentansprüche

1. Vorrichtung mit einer Wendel (12), die um die Längsachse der Wendel rotierbar montiert ist, und Einrichtung zum Reinigen der Wendel, wobei die Reinigungseinrichtung eine Mehrzahl von Reinigungselementen (19) zum Eingriff mit der Wendel oder zum Vorragen in diese aufweist, wobei jedes Reinigungselement (19) mit einem Schaft (18), der sich im wesentlichen parallel zur Längsachse der Wendel (12) erstreckt, gekoppelt ist, wobei der Schaft (18) so angeordnet ist, daß er in einer Richtung, die mindestens eine Komponente hat, die im wesentlichen parallel zur genannten Längsachse ist, hin- und herbewegt werden kann, wobei die Vorrichtung dadurch gekennzeichnet ist, daß jedes Reinigungselement (19) um eine Achse (17) schwenkbar ist, die sich im wesentlichen quer zur Längsachse der Wendel (12) erstreckt, und daß der Schaft (18) die Reinigungselemente (19) zusammen koppelt, so daß sie im wesentlichen zusammen verschwenkt werden.

2. Bodenbearbeitungs-Vorrichtung mit einem Rahmen, einer Wendel (12), die von dem Rahmen für eine Rotation um die Längsachse der Wendel in Kontakt mit dem Boden zum Bearbeiten desselben gestützt ist, und einer Einrichtung zum Reinigen der Wendel, wobei die Reinigungseinrichtung eine Mehrzahl von Reinigungselementen (19) zum Eingriff mit der Wendel oder zum Vorragen in diese aufweist, wobei jedes Reinigungselement (19) mit einem Schaft (18), der sich im wesentlichen parallel zur Längsachse der Wendel (12) erstreckt, gekoppelt ist, wobei der Schaft (18) so angeordnet ist, daß er in einer Richtung, die mindestens eine Komponente hat, die im wesentlichen parallel zur genannten Längsachse ist, hin- und herbewegt werden kann, wobei die Vorrichtung dadurch gekennzeichnet ist, daß jedes Reinigungselement (19) um eine Achse (17) schwenkbar ist, die sich im wesentlichen quer zur Längsachse der Wendel (12) erstreckt, und daß der Schaft (18) die Reinigungselemente (19) zusammen koppelt, so daß sie im wesentlichen zusammen verschwenkt werden.

3. Vorrichtung nach Anspruch 1 oder 2, wobei mindestens ein Eingriffselement (22) so zum Eingriff in die Wendel ausgebildet ist, so daß eine Eingriffswirkung zwischen dem Eingriffselement und der Wendel (12) erzeugt wird, die so ausgebildet ist, daß sie den Schaft (18) in die Richtung bewegt, die mindestens eine Komponente hat, die im wesentlichen parallel zu der Längsachse ist.

4. Vorrichtung nach Anspruch 3, wobei der Schaft (18) federnd angebracht ist und die Eingriffswirkung so ausgebildet ist, daß sie den Schaft (18) entgegen der Wirkung der federnden Befestigung bewegt.

5. Vorrichtung nach einem der vorhergehenden Ansprüche, wobei mindestens zwei beabstandete Eingriffselemente (22) mit dem Schaft (18) gekoppelt sind und eine Mehrzahl von Reinigungselementen (19) auch mit dem Schaft (18) gekoppelt sind, und wobei z.B. die Reinigungselemente (19) Dorne, Stangen, Schaufeln oder andere Vorsprünge aufweisen, die so angeordnet sind, daß sie zwischen Windungen der Wendel vorstehen.

6. Vorrichtung nach einem der Ansprüche 3 bis 5, wobei jedes Eingriffselement (22) einen Körper aufweist, der um eine sich im wesentlichen senkrecht sowohl zur genannten Längsachse als auch zu den Schwenkachsen (17) der Reinigungselemente (19) erstreckende Achse drehbar angeordnet ist, und wobei vorzugsweise der Körper eine Umfangsfläche hat, die zum Eingriff mit Windungen der Wendel ausgebildet ist, wodurch eine Reinigung erzielt wird.

7. Vorrichtung nach Anspruch 6, wobei jeder Körper auch um eine Achse (21) schwenkbar ist, die sich im wesentlichen quer zur Längsachse der Wendel (12) erstreckt und mit dem hin- und herbewegbaren Schaft (18) gekoppelt ist.

8. Vorrichtung nach einem der Ansprüche 1 bis 4, wobei eine Mehrzahl von Reinigungselementen (19, 22) mit dem Schaft (18) verbunden ist und jedes Reinigungselement auch so gestaltet ist, daß es ein Eingriffselement bildet, das zum Eingriff in die Wendel so ausgebildet ist, daß eine Eingriffswirkung zwischen dem Eingriffselement und der Wendel erzeugt wird, die so ausgebildet ist, daß sie den Schaft in die Richtung mit mindestens einer im wesentlichen zu der Längsachse parallelen Komponente bewegt, und wobei vorzugsweise jede Windung der Wendel mindestens ein solches Reinigungs- und Eingriffselement zugeordnet hat.

9. Bodenbearbeitungs-Vorrichtung nach Anspruch 2, oder nach einem der Ansprüche 3 bis 8 mit direktem oder indirektem Bezug auf Anspruch 2, wobei der Schaft (18) auch von dem Rahmen (11) gestützt ist.

10. Bodenbearbeitungs-Vorrichtung nach Anspruch 9, wobei die Enden des Schafts (18) jeweils mit dem Rahmen (11) durch eine jeweilige Zugfeder (16) verbunden sind.

11. Bodenbearbeitungs-Vorrichtung nach Anspruch 9 oder 10, wobei die Reinigungseinrichtung eine Mehrzahl von Eingriffs- und Reinigungskörpern (19, 22) aufweist, die entlang der Länge des Schafts (18) angeordnet sind, wobei jeder solche Körper im wesentlichen von zylindrischer Form ist und wobei die Wendel (12) im wesentlichen schraubenförmig ist und die Teilung der Wendel im wesentlichen dieselbe ist, wie die der Reinigungs- und Eingriffskörper (19, 22), so daß die Körper zwischen den Windungen der Wendel gleichmäßig vorstehen.

12. Bodenbearbeitungs-Vorrichtung nach Anspruch 11, wobei die Wendel (12) einen zentralen axialen Kern hat, der sich im wesentlichen parallel zu dem Schaft (18) erstreckt.

13. Bodenbearbeitungs-Vorrichtung nach einem der Ansprüche 9 bis 12, wobei die Bodenbearbeitungs-Wendel (12) so angeordnet ist, daß sie rotierend durch die Wirkung des Bodenkontakts, wenn die Wendel über den Boden bewegt wird, angetrieben wird.

## Revendications

1. Appareil comprenant une spirale (12) montée à rotation autour de l'axe longitudinal de la spirale et des moyens pour le nettoyage de la spirale, lesdits moyens de nettoyage comprenant une multiplicité d'éléments de nettoyage (19) agencés de façon à entrer en contact avec ladite spirale ou à faire saillie dans celle-ci, chacun desdits éléments de nettoyage (19) étant raccordé à un arbre (18) qui s'étend dans une direction essentiellement parallèle à l'axe longitudinal de la spirale (12), ledit arbre (18) étant agencé de façon à effectuer un mouvement de va-et-vient dans une direction qui présente au moins une composante essentiellement parallèle audit axe longitudinal, l'appareil étant caractérisé en ce que chaque élément de nettoyage (19) peut pivoter autour d'un axe (17) qui s'étend dans une direction essentiellement transversale par rapport audit axe longitudinal de la spirale (12), et en ce que ledit arbre (18) relie lesdits éléments de nettoyage (19) de sorte qu'ils pivotent de façon pratiquement simultanée.

2. Appareil de travail de la terre, comprenant un châssis, une spirale (12) supportée par le châssis à rotation autour de l'axe longitudinal de la spirale au contact du sol, à des fins de travail de la terre, et des moyens pour le nettoyage de la spirale, lesdits moyens de nettoyage comprenant une multiplicité d'éléments de nettoyage (19) agencés de façon à entrer en contact avec ladite spirale ou à faire saillie dans celle-ci, chacun desdits éléments de nettoyage (19) étant raccordé à un arbre (18) qui s'étend dans une direction essentiellement parallèle a l'axe longitudinal de la spirale (12), ledit arbre (18) étant agencé de façon à effectuer un mouvement de va-et-vient dans une direction qui présente au moins une composante essentiellement parallèle audit axe longitudinal, l'appareil étant caractérisé en ce que chaque élément de nettoyage (19) peut pivoter autour d'un axe (17) qui s'étend dans une direction essentiellement transversale par rapport audit axe longitudinal de la spirale (12), et en ce que ledit arbre (18) relie lesdits éléments de nettoyage (19) de sorte qu'ils pivotent de façon pratiquement simultanée.

3. Appareil selon la revendication 1 ou 2, dans lequel au moins un élément-came (22) est disposé de façon à entrer en prise avec ladite spirale, de sorte qu'il soit produit, entre ledit élément-came et ladite spirale (12), un effet de came qui est propre à déplacer ledit arbre (18) dans ladite direction qui présente au moins une composante essentiellement parallèle audit axe longitudinal.

4. Appareil selon la revendication 3, dans lequel ledit arbre (18) est monté à ressort et en ce que ledit effet de came est tel qu'il déplace ledit arbre (18) contre l'action antagoniste du système de montage à ressort.

5. Appareil selon l'une quelconque des revendications 1 à 4, dans lequel au moins deux éléments-cames (22) espacés sont raccordés audit arbre (18) et une multiplicité d'éléments de nettoyage (19) sont également raccordés audit arbre (18), et dans lequel lesdits éléments de nettoyage (19) comprennent par exemple des pointes, des barres, des lames ou d'autres saillies agencées de façon à faire saillie entre les spires de la spirale.

6. Appareil selon l'une quelconque des revendications 3 à 5, dans lequel chacun desdits éléments-cames (22) comprend un corps monté à rotation autour d'un axe qui s'étend dans une direction essentiellement perpendiculaire à la fois audit axe longitudinal et aux axes de pivotement (17) desdits éléments de nettoyage (19), et dans lequel ledit corps a de préférence une surface périphérique disposée de façon à entrer en contact avec des spires de ladite spirale, ce qui produit le nettoyage.

7. Appareil selon la revendication 6, dans lequel chacun desdits corps peut aussi pivoter autour d'un axe (21) qui s'étend dans une direction essentiellement transversale par rapport audit axe longitudinal de la spirale (12), et est raccordé audit arbre pouvant être animé d'un mouvement de va-et-vient (18).

8. Appareil selon l'une quelconque des revendications 1 à 4, dans lequel une multiplicité d'éléments de nettoyage (19, 22) sont raccordés audit arbre (18) et chacun desdits éléments de nettoyage est configuré de manière à constituer également un élément-came agencé de façon à entrer en contact avec ladite spirale, ce qui fait qu'il est produit, entre ledit élément-came et ladite spirale, un effet de came qui est propre à déplacer ledit arbre dans ladite direction présentant au moins une composante qui est essentiellement parallèle audit axe longitudinal, et dans lequel il est de préférence associé, à chaque spire de la spirale, au moins l'un desdits éléments de nettoyage formant came.

9. Appareil de travail de la terre selon la revendication 2 ou selon l'une quelconque des revendications 3 à 8 annexée directement ou indirectement à la revendication 2, dans lequel ledit arbre (18) est également supporté par ledit châssis (11).

10. Appareil de travail de la terre selon la revendication 9, dans lequel les extrémités dudit arbre (18) sont reliées chacune audit châssis (11) par un ressort de tension respectif (16)

11. Appareil de travail de la terre selon la revendication 9 ou 10, dans lequel lesdits moyens de nettoyage comprennent une multiplicité de corps formant came et de nettoyage (19, 22) disposés le long de la longueur dudit arbre (18), chacun de ces corps ayant une forme essentiellement cylindrique, et dans lequel ladite spirale (12) est pratiquement hélicoïdale, le pas de ladite spirale hélicoïdale étant pratiquement le même que celui desdits corps formant came et de nettoyage (19, 22), de sorte que lesdits corps fassent saillie de manière régulière entre les spires de ladite spirale.

12. Appareil de travail de la terre selon la revendication 11, dans lequel ladite spirale hélicoïdale (12) comporte un noyau axial central qui s'étend dans une direction essentiellement parallèle audit arbre (18).

13. Appareil de travail de la terre selon l'une quelconque des revendications 9 à 12, dans lequel la spirale de travail de la terre (12) est agencée de façon à être entraînée en rotation sous l'effet du contact avec le sol tandis que la spirale est déplacée sur le terrain.
